Europäisches Patentamt

European Patent Office

Office européen des brevets

(19)

(11) Veröffentlichungsnummer : **0 378 088 B1**

(12) # EUROPÄISCHE PATENTSCHRIFT

(45) Veröffentlichungstag der Patentschrift :
**12.05.93 Patentblatt 93/19**

(51) Int. Cl.$^5$ : **C08L 77/00, // (C08L77/00, C08K7:04)**

(21) Anmeldenummer : **90100074.5**

(22) Anmeldetag : **03.01.90**

(54) **Füllstoffhaltige thermoplastische Formmassen auf der Basis von Polyamidmischungen.**

(30) Priorität : **09.01.89 DE 3900378**

(43) Veröffentlichungstag der Anmeldung :
**18.07.90 Patentblatt 90/29**

(45) Bekanntmachung des Hinweises auf die Patenterteilung :
**12.05.93 Patentblatt 93/19**

(84) Benannte Vertragsstaaten :
**BE DE ES FR GB NL**

(56) Entgegenhaltungen :
**EP-A- 0 185 853**

(56) Entgegenhaltungen :
**EP-A- 0 355 315**
**DE-A- 2 552 804**
**PATENT ABSTRACTS OF JAPAN, Band 5, Nr. 58 (C-51)[730], 21. April 1981, Seite 155 C 51; & JP-A-56 11 955 (DAICEL K.K.) 05-02-1981**

(73) Patentinhaber : **BASF Aktiengesellschaft**
**Carl-Bosch-Strasse 38**
**W-6700 Ludwigshafen (DE)**

(72) Erfinder : **Goetz, Walter, Dr.**
**Dhauner Strasse 79**
**W-6700 Ludwigshafen (DE)**
Erfinder : **Mc Kee, Graham Edmund, Dr.**
**Kastanienweg 8**
**W-6940 Weinheim (DE)**

EP 0 378 088 B1

## Beschreibung

Die Erfindung betrifft füllstoffhaltige thermoplastische Formmassen aus

(A) 60 bis 98 Gew.% eines feinteiligen, füllstoffhaltigen Polyamids, welches auf 100 Gew.-Teile 1 bis 50 Gew.-Teile eines faser- oder teilchenförmigen Füllstoffes oder deren Mischungen enthält und wobei das darin enthaltene Polyamid eine Viskositätszahl $V_A$ von 90 bis 170 ml/g hat und

(B) 2 bis 40 Gew.% eines feinteiligen hochmolekularen Polyamids einer Viskositätszahl $V_B$ von 190 is 350 ml/g,

wobei $V_A$ und $V_B$ nach DIN 53 727 aus 0,5 %igen Lösungen des Polyamids in 96-gew.-%iger Schwefelsäure bei 25°C bestimmt wurden und sich die Anteile der Komponente (A) und (B) zu 100 Gew.% addieren, mit der Maßgabe, daß $V_B - V_A \geqq 50$ ist.

Weiterhin betrifft die Erfindung die Verwendung dieser Formmassen zur Herstellung von Fasern, Folien und sonstigr Formkörper, ein Verfahren zur Herstellung dieser Formkörper, sowie die aus den erfindungsgemäßen Formmassen erhältlichen Formkörper. Soweit die Erfindung von der älteren EP-A-355 315 berührt wird, betrifft die Erfindung füllstoffhaltige thermoplastische Formmassen gemäß dem hiergegen abgegrenzten Anspruchssatz.

In der älteren europäischen Patentanmeldung EP-A-355 315 werden Mischungen aus teilaromatischen Copolyamiden und Polyamid 66 vorgeschlagen, wobei hochmolekulares Polyamid-66 in Mengen bis zu 9,5 Gew.%, bezogen auf die Polyamidmischung, offenbart wird.

Polyamide werden in vielen Bereichen verwendet, z.B. im Automobilbereich, zur Herstellung von Gehäusen für elektrische Geräte oder auf dem Bausektor.

Eine wichtige Eigenschaft, die bei vielen Anwendungen eine wesentliche Rolle spielt, ist die Schlagzähigkeit der Polyamide.

Aus der US-A 4 174 358 ist bekannt, daß man die Schlagzähigkeit von Polyamiden durch Zusatz von statistischen Copolymeren und einem kautschukelastischen Polymerisat verbessern kann. Die Schlagzähigkeit dieser Produkte bei tiefen Temperaturen sind jedoch nicht zufriedenstellend.

Aus der EP-A 34 704 ist bekannt, daß Mischungen aus Poly-ε-caprolactam und Polyhexamethylenadipinsäureamid in Verbindung mit bestimmten Kautschuken gegenüber entsprechenden Abmischungen, die nur eines der Polyamide enthalten, verbesserte Schlagzähigkeiten aufweisen. Jedoch läßt die Wärmeformbeständigkeit von Formkörpern aus diesen Mischungen zu wünschen übrig.

In der älteren europäischen Patentanmeldung 88117105.2 wurden Mischungen aus Polyamid 6.6, einem Copolyamid aus Adipinsäure, Hexamethylendiamin und ε-Caprolactam sowie einem schlagzähmodifizierenden Kautschuk vorgeschlagen.

Die kautschukhaltigen Polyamide haben den weiteren Nachteil, daß sie sich meist nur mit großen verfahrenstechnischem Aufwand zu füllstoffhaltigen Formmassen verarbeiten lassen.

Die durch den Kautschuk verbesserte Schlagzähigkeit ist aber in den meisten Fällen mit einer oxidativen und thermischen Schädigung des Polyamids sowie einer erhöhten Anfälligkeit der Formkörper gegen organische Lösungsmittel und UV-Licht verbunden.

Der vorliegenden Erfindung lag daher die Aufgabe zugrunde, füllstoffhaltige thermoplastische Polyamidformmassen ohne einen schlagzähmodifizierenden Kautschuk zur Verfügung zu stellen, die eine verbesserte Schlagzähigkeit bei gleichzeitig guter Zugfestigkeit aufweisen.

Demgemäß wurden die eingangs definierten thermoplastischen Formmassen gefunden.

Bevorzugte Formmassen dieser Art und ihre Verwendung sind den Unteransprüchen zu entnehmen.

Als Komponente (A) enthalten die erfindungsgemäßen Formmassen 60 bis 98, vorzugsweise 70 bis 90, und insbesondere 70 bis 80 Gew.% eines feinteiligen, thermoplastischen, füllstoffhaltigen Polyamids. Bevorzugt sind Polyamide mit einer Viskositätszahl $V_A$ von 90 bis 170, besonders bevorzugt von 125 bis 140 ml/g.

Die Viskositätszahl ist ein Maß für das Molekulargewicht des Polyamids und wird im allgemeinen nach DIN 53 727 mit einem Ubbelohde-Viskosimeter an 0,5 %igen Lösungen des Polyamids in 96 gew.%iger Schwefelsäure bei 25°C bestimmt. Diese Viskositätszahlen entsprechen einer relativen Viskosität $\eta_{rel}$ der Polyamide von 1,8 bis 3,4, vorzugsweise von 2,5 bis 2,8, bestimmt in einer 1 vol.%igen Lösung von 96 gew.%iger Schwefelsäure bei 25°C, was für den Bereich von $V_A$ einem Molekulargewicht (Gewichtsmittelwert) von etwa 20.000 bis 50,000 entspricht.

Halbkristalline oder amorphe Polyamide mit einem Molekulargewicht (Gewichtsmittelwert) von mindestens 5000, wie sie z.B. in den amerikanischen Patentschriften 2 071 250, 2 071 251, 2 130 523, 2 130 948, 2 241 322, 2 312 966, 2 512 606 und 3 393 210 beschrieben werden, sind bevorzugt.

Beispiele hierfür sind Polyamide die sich von Lactamen mit 7 bis 13 Ringgliedern ableiten, wie Polycaprolactam, Polycapryllactam und Polylaurinlactam, sowie Polyamide, die durch Umsetzung von Dicarbonsäuren mit Diaminen erhalten werden.

Als Dicarbonsäuren sind Alkandicarbonsäuren mit 6 bis 12, insbesondere 6 bis 10 Kohlenstoffatomen und aromatische Dicarbonsäuren einsetzbar, vor allem unverzweigte $\alpha,\omega$-Dicarbonsäuren wie Adipinsäure, Azelainsäure, Sebacinsäure, Dodecandisäure sowie aromatische Dicarbonsäuren wie Terephthal- und/oder Isophthalsäure.

Als Diamine eignen sich besonders unverzweigte $\alpha,\omega$-Alkandiamine mit 6 bis 12, inbesondere 6 bis 8 Kohlenstoffatomen sowie m-Xylylendiamin, Di-(4-aminophenyl)-methan, Di-(4-aminocyclohexyl)-methan, 2,2-Di-(4-aminophenyl)-propan oder 2,2-Di-(4-aminocyclohexyl)-propan.

Bevorzugte Polyamide sind Polyhexamethylenadipinsäureamid, Polyhexamethylensebacinsäureamid von Polycaprolactam. Weiterhin sind Polyamide, die durch Copolymerisation zweier oder mehrerer der vorgenannten Monomeren erhältlich sind, oder Mischungen mehrerer Polyamide geeignet.

Erwähnt seien teilaromatische Copolyamide, insbesondere solche, deren Einheiten sich von Terephthalsäure und Hexamethylendiamin, von Adipinsäure und Hexamethylendiamin oder von Terephthalsäure, Hexamethylendiamin und $\varepsilon$-Caprolactam ableiten. Vor allem sind hierbei solche Copolyamide zu nennen, deren Triamingehalt (Gehalt an Bis-hexamethylentriamin) unter 0,5 Gew.% liegt. Entsprechende Produkte sind in Anlehnung an das in EP-A 129 195 und 129 196 beschriebene Verfahren erhältlich.

Außerdem seien noch Polyamide erwähnt, die durch Kondensation von 1,4-Diaminobutan mit Adipinsäure bei erhöhter Temperatur erhältlich sind (Polyamid-4,6). Herstellungsverfahren für Polyamide dieser Struktur sind z.B. in den EP-A 38 094, 38 582 und 39 524 beschrieben.

Die Polyamide der Komponente (A) enthalten auf 100 Gew.-Teilen 1 bis 50 Gew.-Teile, bevorzugt 10 bis 40 Gew.-Teile und insbesondere 25 bis 30 Gew.-Teile eines faser- oder teilchenförmigen Füllstoffes oder deren Mischungen.

Bevorzugte faserförmige Verstärkungsstoffe sind Kohlenstoff-Fasern, Kaliumtitanatwhisker, Aramidfasern und besonders bevorzugt Glasfasern. Bei der Verwendung von Glasfasern können diese zur besseren Verträglichkeit mit dem thermoplastischen Polyamid mit einer Schlichte, z.B. Polyurethane und einem Haftvermittler, z.B. Aminotrialkoxysilane ausgerüstet sein. Im allgemeinen haben die verwendeten Glasfasern einen Durchmesser im Bereich von 6 bis 20 $\mu$m.

Die Einarbeitung dieser Glasfasern kann sowohl in Form von Kurzglasfasern als auch in Form von Endlossträngen (Rovings) erfolgen. Im fertigen Spritzgußteil liegt die mittlere Länge der Glasfasern vorzugsweise im Bereich von 0,08 bis 0,5 mm.

Weiterhin kann die Einarbeitung der Glasfasern auch durch einen Pultrusionsvorgang erfolgen, wie er in der EP-A-56 703 beschrieben ist. Dabei wird der Glasfaserstrang mit der Polymermasse durchtränkt und anschließend abgekühlt und zerkleinert. Die Glasfaserlänge ist in diesem Fall identisch mit der Granulatlänge und liegt zwischen 3 und 20 mm.

Als nichtfaserförmige Füllstoffe eignen sich amorphe Kieselsäure, Asbest, Magnesiumcarbonat (Kreide), Kaolin (insbesondere calcinierter Kaolin), Montmarillonit, gepulverter Quarz, Glimmer, Talkum, Feldspat und vor allem Calciumsilikate wie Wollastonit.

Bevorzugte Füllstoffkombinationen bestehen aus 15 bis 25 Gew.-Teilen Glasfasern und 20 bis 35 Gew.-Teilen Wollastonit oder calciniertem Kaolin.

Die Herstellung der füllstoffhaltigen Polyamide erfolgt im allgemeinen nach bekannten Verfahren, so daß sich weitere Ausführungen hierzu erübrigen.

Der Anteil der Füllstoffe in den erfindungsgemäßen Formmassen, bezogen auf die Komponenten (A) und (B), beträgt 1 bis 49 Gew.%, bevorzugt von 15 bis 35 Gew.%.

Als Komponente (B) enthalten die erfindungsgemäßen Formmassen 2 bis 40, bevorzugt von 5 bis 35, und insbesondere von 10 bis 30 Gew.% eines feinteiligen, hochmolekularen Polyamids. Bevorzugt sind Polyamide mit einer Viskositätszahl $V_B$ (nach DIN 53 727) von 190 bis 350 und insbesondere von 220 bis 300 ml/g.

In der Regel eignen sich alle vorstehend aufgeführten Polyamide, die im Unterschied zu den füllstoffhaltigen Polyamiden (A) jedoch ein weitaus höheres Molekulargewicht aufweisen. Die Differenz der Viskositätszahlen $V_B$-$V_A$ beträgt vorzugsweise 100 bis 50 ml/g, insbesondere 60 bis 80 ml/g.

Bevorzugte Polyamide sind unverstärktes Polyhexamethylenadipinsäureamid und Polycaprolactam oder Mischungen dieser Polyamide.

Neben den wesentlichen Komponenten (A) und (B) können die erfindungsgemäßen Formmassen übliche Zusatzstoffe und Verarbeitungshilfsmittel enthalten. Deren Anteil beträgt im allgemeinen bis zu 20, vorzugsweise bis zu 10 Gew.%, bezogen auf das Gesamtgewicht der Komponenten (A) und (B).

Übliche Zusatzstoffe sind beispielsweise Stabilisatoren und Oxidationsinhibitoren, Mittel gegen Wärmezersetzung und Zersetzung durch ultraviolettes Licht, Gleit- und Entformungsmittel, Färbemittel wie Farbstoffe und Pigmente, nichtverstärkende Füllstoffe und Weichmacher. Oxidationsinhibitoren und Wärmestabilisatoren, die den thermoplastischen Massen gemäß der Erfindung zugesetzt werden können, sind z.B. Halogenide von Metallen der Gruppe I des Periodensystems, z.B. Natrium-, Kalium-, Lithium-Halogenide, gegebenenfalls in Verbindung mit Kupfer-(I)-halogeniden, z.B. Chloriden, Bromiden oder Jodiden. Ferner sind sterisch gehinderte Phenole, Hydrochinone, substituierte Vertreter dieser Gruppe und Mischungen dieser, vorzugsweise in Konzentrationen bis zu 1 Gew.%, bezogen auf das Gewicht der Mischung aus (A) und (B) einsetzbar.

Beispiele für UV-Stabilisatoren sind substituierte Resorcine, Salicylate, Benzotriazole und Benzophenone, die im allgemeinen in Mengen bis zu 2 Gew.% eingesetzt werden.

Gleit- und Entformungsmittel, die in der Regel in Mengen bis zu 3 Gew.% der thermoplastischen Masse zugesetzt werden, sind Stearinsäure, Stearylalkohol, Stearate, Stearinsäurealkylester und -amide sowie Ester des Pentaerythrits mit langkettigen Fettsäuren.

Ferner können organische Farbstoffe wie Nigrosin, Pigmente z.B. Titandioxid, Zinksulfid, Cadmiumsulfid, Calmiumsulfidselenit, Phthalocyanine, Ultramarinblau oder Ruß zugesetzt werden.

Die erfindungsgemäßen Formmassen können weiterhin Flammschutzmittel in einer Konzentration bis zu 40 Gew.%, bevorzugt von bis zu 20 Gew.%, bezogen auf das Gesamtgewicht der Komponenten (A) und (B), enthalten.

Es kommen alle bekannten Flammschutzmittel in Betracht, z.B. Polyhalogendiphenyl, Polyhalogendiphenylether, Polyhalogenphthalsäure und ihre Derivate, Polyhalogenoligo- und -polycarbonate, wobei die Bromverbindungen besonders wirksam sind.

Bevorzugtes Flammschutzmittel sind elementarer Phosphor, vor allem im Falle glasfaserverstärkter Formmassen, organische Phosphorverbindungen wie die Ester der Phosphorsäure, der phosphorigen Säure und von Phosphon- und Phosphinsäuren sowie tertiäre Phosphine und Phosphinoxide. Als Beispiel sei Triphenylphosphinoxid genannt. Dieses kann allein oder vermischt mit Hexabrombenzol oder einem chlorierten Biphenyl und, wahlweise, Antimonoxid verwendet werden.

Als Flamschutzmittel sind auch solche Verbindungen geeignet, die Phosphor-Stickstoff-Bindungen enthalten, wie Phosphornitrilchlorid, Phosphorsäureesteramide, Phosphorsäureamide, Phosphonsäureamide, Phosphinsäureamide, Tris-(aziridinyl)-phosphinoxid oder Tetrakis-(hydroxymethyl)-phosphoniumchlorid.

Weitere halogenhaltige Flammschutzmittel sind Tetrabrombenzol, Hexachlorbenzol und Hexabrombenzol sowie halogenierte Polystyrole oder Polyphenylenether.

Auch die in der DE-A-19 46 924 beschriebenen halogenierten Phthalimide können verwendet werden. Von diesen hat insbesondere N,N'-Ethylen-bis-tetrabromphthalimid Bedeutung erlangt.

Die Flammschutzmittel sind vorzugsweise in der Komponente (A) neben den oben aufgeführten Füllstoffen enthalten.

Die erfindungsgemäßen Formmassen werden im allgemeinen hergestellt, indem man das Granulat des wie üblich konfektionierten Polyamids (A) mit dem Granulat des Polyamids (B) mischt und anschließend als Granulatmischung verspritzt. Die Teilchengröße des Granulats beträgt von 1 bis 20 mm, vorzugsweise von 2 bis 10 mm.

Die erfindungsgemäß verwendbaren Polyamide (A) und (B) können denselben Aufbau aufweisen; es sind jedoch auch Mischungen von Polyamiden einsetzbar die sich im Aufbau unterscheiden. Bevorzugt sind Mischungen aus füllstoffhaltigem Nylon-6.6 (Komponente A) mit hochmolekularem unverstärktem Nylon-6.6 und/oder Nylon-6 (Komponente B).

Die Formkörper aus den erfindungsgemäßen thermoplastischen Formmassen zeichnen sich durch eine hohe Schlagzähigkeit und Zugfestigkeit aus. Sie sind gegenüber organischen Lösungsmitteln beständig und zeigen nur geringen Gleitabrieb bei Anwesenheit von Metallen im Werkstoff. Von besonderem Vorteil ist ihre Anwendung für die Herstellung von Lagerkäfigen für Kugellager (Getriebeteile) oder kraftstofführenden Motorteilen.

Beispiele

Zur Herstellung der erfindungsgemäßen Formmassen wurden folgende Komponenten eingesetzt:

Komponente (A1)

Ein Granulat bestehend aus

65 Gew.-Teilen Polyhexamethylenadipinsäureamid mit einer Viskositätszahl $V_A$ von 141 ml/g (gemessen nach DIN 53 727 an 0,5 %igen Lösungen in 96 gew.%iger Schwefelsäure bei 25°C) und

35 Gew.-Teilen Glasfasern ($\Phi$: 10 µm) mit einer aminosilanisierten Oberfläche (Schlichte)

Komponente (A2)

Ein Granulat aus

| 75 Gew.-Teilen | Polyhexamethylenadipinsäureamid mit einer Viskositätszahl von 148 ml/g und |
| 25 Gew.-Teilen | Glasfasern ($\Phi$: 10 $\mu$m). |

Komponente (B1)

Ein Granulat aus Polyhexamethylenadipinsäureamid mit einer Viskositätszahl von 255 ml/g.

Komponente (B2)

Ein Granulat aus Polycaprolactam mit einer Viskositätszahl von 302 ml/g.

Komponente (B3)

Eine 1:1-Granulatmischung aus Komponente (B1) und Komponente (B2).

Komponente (B4) (zum Vergleich gemäß EP-A-34 704)

Ein Granulat aus Polyhexamethylenadipinsäureamid mit einer Viskositätszahl von 139 ml/g.

Komponente (B5) (zum Vergleich)

Ein Granulat aus Polycaprolactam mit einer Viskositätszahl von 149 ml/g.

Komponente (B6) (zum Vergleich)

Eine 1:1-Granulatmischung aus den Komponenten (B4) und (B5).

Komponente (B7) (zum Vergleich gemäß US 4,174,358)

Ein Granulat aus einem statistischen Copolyamid mit 10 Gew.-Einheiten, die sich von $\varepsilon$-Caprolactam ableiten und 90 Gew.-Einheiten, die sich von Adipinsäure und Hexamethylendiamin ableiten mit einer Viskositätszahl von 138 ml/g.

Aus der Granulatmischung bestehend aus 70 Gew.% der Komponente (A) und 30 Gew.% der jeweiligen Komponente (B) wurde im Spritzgußverfahren bei 280°C Massetemperatur und 80°C Werkzeugoberflächentemperatur Testkörper zur Bestimmung der ungekerbten Schlagzähigkeit $a_n$ nach DIN 53 453 und der Zugfestigkeit nach DIN 53 457 hergestellt.

Die Zusammensetzung der Massen und die Meßergebnisse sind der folgenden Tabelle zu entnehmen.

Tabelle

| Beispiel | Zusammensetzung (Gew.%) | | | | Zugfestigkeit (DIN 53457) [mPas] | Schlagzähigkeit (DIN 53453) [kJ/m²] | |
|---|---|---|---|---|---|---|---|
| | | | | | | 23°C | −20°C |
| 1 | 70 | (A1) | 30 | (B1) | 159 | 48 | 37 |
| 2 | 70 | (A1) | 30 | (B2) | 155 | 60 | 42 |
| 3 | 70 | (A1) | 30 | (B3) | 150 | 57 | 40 |
| 4* | 70 | (A1) | 30 | (B4) | 149 | 33 | 29 |
| 5* | 70 | (A1) | 30 | (B5) | 155 | 42 | 35 |
| 6* | 70 | (A1) | 30 | (B6) | 149 | 40 | 32 |
| 7* | 70 | (A1) | 30 | (B7) | 146 | 38 | 29 |
| 8* | 100 | (A2) | | – | 153 | 36 | 30 |

*) zum Vergleich

## Patentansprüche

### Patentansprüche für folgende Vertragsstaaten : BE, DE, FR, GB, NL

1. Füllstoffhaltige thermoplastische Formmassen aus
   (A) 60 bis 90 Gew.% eines feinteiligen, füllstoffhaltigen Polyamids, welches auf 100 Gew.-Teile 1 bis 50 Gew.-Teile eines faser- oder teilchenförmigen Füllstoffes oder deren Mischungen enthält und wobei das darin enthaltene Polyamid eine Viskositätszahl $V_A$ von 90 bis 170 ml/g hat und
   (B) 40 bis 10 Gew.% eines feinteiligen hochmolekularen Polyamids einer Viskositätszahl $V_B$ von 190 bis 350 ml/g,
   wobei $V_A$ und $V_B$ nach DIN 53 727 aus 0,5 %igen Lösungen des Polyamids in 96-gew.-%iger Schwefelsäure bei 25°C bestimmt wurden und sich die Anteile der Komponente (A) und (B) zu 100 Gew.% addieren, mit der Maßgabe, daß $V_B - V_A \geqq 50$ ist.

2. Füllstoffhaltige thermoplastische Formmassen nach Anspruch 1 aus
   90 bis 70 Gew.% der Komponente (A) und
   10 bis 30 Gew.% der Komponente (B).

3. Füllstoffhaltige thermoplastische Formmassen nach den Ansprüchen 1 oder 2, in denen der Anteil der Füllstoffe in der Komponente (A) 10 bis 30 Gew.-Teile pro 100 Gew.-Teile des Polyamids beträgt.

4. Füllstoffhaltige thermoplastische Formmassen nach den Ansprüchen 1 bis 3, in denen die Füllstoffe Glasfasern, Wollastonit, Kohlenstoff-Fasern oder Mischungen dieser Stoffe sind.

5. Füllstoffhaltige thermoplastische Formmassen nach den Ansprüchen 1 bis 4, in denen die Komponente (B) aus Polyhexamethylenadipinsäureamid und/ oder Polycaprolactam besteht.

6. Verwendung der füllstoffhaltigen thermoplastischen Formmassen gemäß den Ansprüchen 1 bis 5 zur Herstellung von Fasern, Folien und sonstigen Formkörpern.

7. Formkörper hergestellt aus füllstoffhaltigen thermoplastischen Formkörper gemäß den Ansprüchen 1 bis 6.

**Patentansprüche für folgenden Vertragsstaat : ES**

1.  Füllstoffhaltige thermoplastische Formmassen aus
    (A) 60 bis 98 Gew.% eines feinteiligen, füllstoffhaltigen Polyamids, welches auf 100 Gew.-Teile 1 bis 50 Gew.-Teile eines faser- oder teilchenförmigen Füllstoffes oder deren Mischungen enthält und wobei das darin enthaltene Polyamid eine Viskositätszahl $V_A$ von 90 bis 170 ml/g hat und
    (B) 2 bis 40 Gew.% eines feinteiligen hochmolekularen Polyamids einer Viskositätszahl $V_B$ von 190 bis 350 ml/g,
    wobei $V_A$ und $V_B$ nach DIN 53 727 aus 0,5 %igen Lösungen des Polyamids in 96-gew.-%iger Schwefelsäure bei 25°C bestimmt wurden und sich die Anteile der Komponente (A) und (B) zu 100 Gew.% addieren, mit der Maßgabe, daß $V_B - V_A \geqq 50$ ist.

2.  Füllstoffhaltige thermoplastische Formmassen nach Anspruch 1 aus
    90 bis 70 Gew.% der Komponente (A) und
    10 bis 30 Gew.% der Komponente (B).

3.  Füllstoffhaltige thermoplastische Formmassen nach den Ansprüchen 1 oder 2, in denen der Anteil der Füllstoffe in der Komponente (A) 10 bis 30 Gew.-Teile pro 100 Gew.-Teile des Polyamids beträgt.

4.  Füllstoffhaltige thermoplastische Formmassen nach den Ansprüchen 1 bis 3, in denen die Füllstoffe Glasfasern, Wollastonit, Kohlenstoff-Fasern oder Mischungen dieser Stoffe sind.

5.  Füllstoffhaltige thermoplastische Formmassen nach den Ansprüchen 1 bis 4, in denen die Komponente (B) aus Polyhexamethylenadipinsäureamid und/ oder Polycaprolactam besteht.

6.  Verwendung der füllstoffhaltigen thermoplastischen Formmassen gemäß den Ansprüchen 1 bis 5 zur Herstellung von Fasern, Folien und sonstigen Formkörpern.

7.  Formkörper hergestellt aus füllstoffhaltigen thermoplastischen Formkörper gemäß den Ansprüchen 1 bis 6.

**Claims**

**Claims for the following Contracting States : BE, DE, FR, GB, NL**

1.  A filler-containing thermoplastic molding material comprising
    (A) 60 to 90% by weight of a finely particulate, filler-containing polyamide which contains, based on 100 parts by weight, from 1 to 50 parts by weight of a fibrous or particulate filler or mixtures thereof, the polyamide contained in the molding material having a viscosity number $V_A$ of from 90 to 170 ml/g, and
    (B) 40 to 10% by weight of a finely particulate, high molecular weight polyamide having a viscosity number $V_B$ of from 190 to 350 ml/g,
    $V_A$ and $V_B$ being determined according to DIN 53 727 from 0.5% strength solutions of the polyamide in 96% by weight sulfuric acid at 25°C and the proportions of the components (A) and (B) amounting to 100% by weight, with the proviso that $V_B - V_A \geqq 50$.

2.  A filler-containing thermoplastic molding material as claimed in claim 1, comprising
    90 to 70% by weight of the component (A) and
    10 to 30% by weight of the component (B).

3.  A filler-containing thermoplastic molding material as claimed in claim 1 or 2, in which the proportion of the fillers in the component (A) is 10 to 30 parts by weight per 100 parts by weight of the polyamide.

4.  A filler-containing thermoplastic molding material as claimed in any of claims 1 to 3, in which the fillers are glass fibers, wollastonite, carbon fibers or mixtures thereof.

5.  A filler-containing thermoplastic molding material as claimed in any of claims 1 to 4, in which the component (B) comprises polyhexamethyleneadipamide and/or polycaprolactam.

6. The use of a filler-containing thermoplastic molding material as claimed in any of claims 1 to 5 for producing fibers, films and other molded articles.

7. A molded article prepared from a filler-containing thermoplastic molding material as claimed in any of claims 1 to 6.

**Claims for the following Contracting State : ES**

1. A filler-containing thermoplastic molding material comprising
   (A) 60 to 98% by weight of a finely particulate, filler-containing polyamide which contains, based on 100 parts by weight, from 1 to 50 parts by weight of a fibrous or particulate filler or mixtures thereof, the polyamide contained in the molding material having a viscosity number $V_A$ of from 90 to 170 ml/g and,
   (B) 2 to 40% by weight of a finely particulate, high molecular weight polyamide having a viscosity number $V_B$ of from 190 to 350 ml/g,
   $V_A$ and $V_B$ being determined according to DIN 53 727 from 0.5% strength solutions of the polyamide in 96% by weight sulfuric acid at 25°C and the proportions of the components (A) and (B) amounting to 100% by weight, with the proviso that $V_B - V_A \geqq 50$.

2. A filler-containing thermoplastic molding material as claimed in claim 1, comprising
   90 to 70% by weight of the component (A) and
   10 to 30% by weight of the component (B).

3. A filler-containing thermoplastic molding material as claimed in claim 1 or 2, in which the proportion of the fillers in the component (A) is 10 to 30 parts by weight per 100 parts by weight of the polyamide.

4. A filler-containing thermoplastic molding material as claimed in any of claims 1 to 3, in which the fillers are glass fibers, wollastonite, carbon fibers or mixtures thereof.

5. A filler-containing thermoplastic molding material as claimed in any of claims 1 to 4, in which the component (B) comprises polyhexamethyleneadipamide and/or polycaprolactam.

6. A method of using a filler-containing thermoplastic molding material as claimed in any of claims 1 to 5 for producing fibers, films and other molded articles.

7. A molded article prepared from a filler-containing thermoplastic molding material as claimed in any of claims 1 to 6.

**Revendications**

**Revendications pour les Etats contractants suivants : BE, DE, FR, GB, NL**

1. Masses à mouler thermoplastiques contenant des charges, composées de
   (A) 60 à 90% en poids d'un polyamide finement divisé et contenant une charge, polyamide qui contient, pour 100 parties en poids, de 1 à 50 parties en poids d'une charge en forme de fibres ou de particules ou de mélanges de celles-ci, le polyamide contenu ayant un indice de viscosité $V_A$ de 90 à 170 ml/g, et
   (B) 40 à 10% en poids d'un polyamide de poids moléculaire élevé, finement divisé, ayant un indice de viscosité $V_B$ de 190 à 350 ml/g,
   $V_A$ et $V_B$ ayant été déterminés, conformément à la norme DIN 53 727, à 25°C sur des solutions à 0,5% du polyamide dans de l'acide sulfurique à 96% en poids, et la somme des parts des composants (A) et (B) s'élevant à 100% en poids, étant spécifié que $V_B - V_A \geqq 50$.

2. Masses à mouler thermoplastiques contenant des charges selon la revendication 1, composées de
   90 à 70% en poids du composant (A) et
   10 à 30% en poids du composant (B).

3. Masses à mouler thermoplastiques contenant des charges selon la revendication 1 ou 2, dans lesquelles la proportion des charges dans le composant (A) s'élève à 10-30 parties en poids pour 100 parties en poids du polyamide.

4. Masses à mouler thermoplastiques contenant des charges selon l'une quelconque des revendications 1 à 3, dans lesquelles les charges sont des fibres de verre, de la wollastonite, des fibres de carbone ou des mélanges de ces matières.

5. Masses à mouler thermoplastiques contenant des charges selon l'une quelconque des revendications 1 à 4, dans lequelles le composant (B) est constitué par du polyhexaméthylèneadipamide et/ou du polycaprolactame.

6. Utilisation des masses à mouler thermoplastiques contenant des charges selon l'une quelconque des revendications 1 à 5 pour la fabrication de fibres, de feuilles et d'autres corps moulés.

7. Corps moulés, fabriqués à partir de masses à mouler thermoplastiques contenant des charges selon l'une quelconque des revendications 1 à 6.

**Revendications pour l'Etat contractant suivant : ES**

1. Masses à mouler thermoplastiques contenant des charges, composées de
(A) 60 à 98% en poids d'un polyamide finement divisé et contenant une charge, polyamide qui contient, pour 100 parties en poids, de 1 à 50 parties en poids d'une charge en forme de fibres ou de particules ou de mélanges de celles-ci, le polyamide contenu ayant un indice de viscosité $V_A$ de 90 à 170 ml/g, et
(B) 2 à 40% en poids d'un polyamide de poids moléculaire élevé, finement divisé, ayant un indice de viscosité $V_B$ de 190 à 350 ml/g,
$V_A$ et $V_B$ ayant été déterminés, conformément à la norme DIN 53 727, à 25°C sur des solutions à 0,5% du polyamide dans de l'acide sulfurique à 96% en poids, et la somme des parts des composants (A) et (B) s'élevant à 100% en poids, étant spécifié que $V_B$ - $V_A \geqq 50$.

2. Masses à mouler thermoplastiques contenant des charges selon la revendication 1, composées de
90 à 70% en poids du composant (A) et
10 à 30% en poids du composant (B).

3. Masses à mouler thermoplastiques contenant des charges selon la revendication 1 ou 2, dans lesquelles la proportion des charges dans le composant (A) s'élève à 10-30 parties en poids pour 100 parties en poids du polyamide.

4. Masses à mouler thermoplastiques contenant des charges selon l'une quelconque des revendications 1 à 3, dans lesquelles les charges sont des fibres de verre, de la wollastonite, des fibres de carbone ou des mélanges de ces matières.

5. Masses à mouler thermoplastiques contenant des charges selon l'une quelconque des revendications 1 à 4, dans lesquelles le composant (B) est constitué par du polyhexaméthylèneadipamide et/ou du polycaprolactame.

6. Utilisation des masses à mouler thermoplastiques contenant des charges selon l'une quelconque des revendications 1 à 5 pour la fabrication de fibres, de feuilles et d'autres corps moulés.

7. Corps moulés, fabriqués à partir de masses à mouler thermoplastiques contenant des charges selon l'une quelconque des revendications 1 à 6.